# EUROPÄISCHE PATENTSCHRIFT

(11) **EP 2 698 089 B1**
(45) Veröffentlichungstag und Bekanntmachung des Hinweises auf die Patenterteilung: **07.11.2018**
(21) Anmeldenummer: 13176705.5
(22) Anmeldetag: 16.07.2013
(51) Int. Cl.: A47J 37/04

(54) **Schiebemuffe für ein Dönergrillgerät**
Sliding sleeve for kebab grill apparatus
Manchon coulissant pour un gril pour viandes à kébab

(30) Priorität: 16.08.2012 DE 202012103094 U
(43) Veröffentlichungstag der Anmeldung: 19.02.2014
(73) Patentinhaber: Demirel, Saffet, 72108 Rottenburg (DE)
(72) Erfinder: Demirel, Saffet, 72108 Rottenburg (DE)
(74) Vertreter: Klocke, Peter

(56) Entgegenhaltungen:
- DE-U1- 9 406 390
- US-A- 3 604 341
- US-B1- 6 837 149

## Beschreibung

Die Erfindung betrifft eine Dönergrillgerät-Schiebemuffe zur Lagerung eines vertikal an einem Dönergrillgerät montierbaren kantigen Fleischspießes, die an einer oberen oder unteren Gleitschiene des Dönergrillgerätes verschiebbar montierbar und dort mittels einer seitlichen Klemmschraube arretierbar ist, und die eine Gleitbuchse für die Gleitschienen und eine mit der Gleitbuchse verbundene Spießaufnahme mit einer Ausnehmung zum Einführen eines unteren oder oberen Endes des Fleischspießes aufweist.

Solche Drehspieß-Grillgeräte mit einem senkrecht anordbaren Fleischspieß sind allgemein in vielfältigen Ausführungsformen bekannt. Bei diesem ist der Fleischspieß um seine Längsachse drehbar an dem Grillgerät gelagert, wobei in der Regel ein motorischer Antrieb den Fleischspieß in Drehbewegung versetzt und so das vom Fleischspieß getragene Grillgut langsam relativ zu mindestens einem Wärmestrahler bewegt. Handelsübliche Dönergrillgeräte nehmen den Fleischspieß üblicherweise mittels zweier Tragarme auf, die als obere und untere Gleitschiene ausgeführt sind und sich von dem mindestens einen Wärmestrahler weg erstrecken. Auf jeder Gleitschiene ist eine verschiebbare arretierbare Schiebemuffe mit einer Spießaufnahme angeordnet, mit denen der Abstand des Fleischspießes und damit des Grillgutes gegenüber dem Wärmestrahler einstellbar ist. Bekannte Geräte weisen Schiebemuffen auf, bei denen die Spießaufnahmen für die Enden des Fleischspießes und die den Gleitschienen zugeordneten Gleitbuchsen jeweils einstückig ausgeführt und starr miteinander verbunden sind.

Dönerfleischspieße für professionelle Dönergrillgeräte wiegen gewöhnlich typisch zwischen 50 und 90 kg. Sie werden meist horizontal gelagert und transportiert. Zum Einsetzen in das Dönergrillgerät müssen diese aufgerichtet und bei an der Gleitschiene angebrachter unterer Schiebemuffe in deren Spießaufnahme vertikal eingesetzt und anschließend mit der oberen Schiebemuffe an der oberen Gleitschiene befestigt werden. Die Aufrichtung des Dönerfleischspießes und die Einführung des unteren Endes des Fleischspießes in die untere Spießaufnahme erfordert angesichts des hohen Gewichtes des Dönerfleischspießes von bis zu 90 kg und mehr einen enormen Kraftaufwand. Es handelt sich dabei also um eine Arbeit für kräftige Personen. Führt eine Person diese Arbeit über lange Jahre ohne Mithilfe einer weiteren Person aus, so führt dies häufig zu gesundheitlichen Schädigungen.

Aus US-B-6837149 ist eine Dönergrillgerät-Schiebemuffe nach dem Oberbegriff des unabhängigen Anspruchs 1 bekannt.

Ausgehend von dem vorstehend beschriebenen Stand der Technik liegt der Erfindung die Aufgabe zugrunde, eine Dönergrillgerät-Schiebemuffe vorzuschlagen, die eine Arbeitserleichterung ermöglicht. Diese soll zudem bei bestehenden handelsüblichen Geräten nachrüstbar sein.

Diese Aufgabe wird erfindungsgemäß durch eine Dönergrillgerät-Schiebemuffe mit den Merkmalen des Anspruchs 1 gelöst. Weitere vorteilhafte Ausgestaltungen sind den rückbezogenen Ansprüchen zu entnehmen.

Der Erfindung liegt der Kerngedanke zugrunde, die Dönergrillgerät-Schiebemuffe gelenkig auszubilden, so dass das untere Ende des Fleischspießes bei horizontal ausgerichteten Dönerfleischspieß in die Spießaufnahme der unteren Dönergrillgerät-Schiebemuffe einsetzbar ist. Dabei ist die Schiebemuffe an der unteren Gleitschiene montiert und arretiert, sodass sich der Fleischspieß beim Aufrichten an der unteren Gleitschiene über die Schiebemuffe abstützen kann. Durch das zwischen der Gleitbuchse und der Spießaufnahme erfindungsgemäß vorgesehene Gelenk ist der Dönergrillspieß trotz seines enormen Gewichtes einfach aufrichtbar.

Danach ist bei der erfindungsgemäßen Dönergrillgerät-Schiebemuffe die Spießaufnahme um eine Schwenkachse schwenkbar gegenüber der Gleitbuchse angeordnet, wobei sich die Schwenkachse senkrecht zu der Längsrichtung der Ausnehmung erstreckt, in die das untere bzw. obere Ende des Fleischspießes eingeführt wird. Dabei erstrecken sich die Schwenkachse und die Gleitbuchse in voneinander beabstandeten parallelen Ebenen zueinander. Die Gleitschiene ist bei herkömmlichen Dönergrillgeräten in der Regel aus Vierkantrohr gefertigt und die Gleitbuchse der Scheibemuffe entsprechend geformt. Dabei kann die Gleitbuchse auch einen durchgehenden Längsschlitz aufweisen oder vollkommen U-förmig ausgebildet sein. In jedem Fall weist die Gleitbuchse in Richtung der Spießaufnahme eine geschlossene vorzugsweise ebene Fläche auf, die die Ebene bestimmt, zu der sich die Schwenkachse parallel erstreckt.

Bei einer bevorzugten Ausführungsform der Erfindung ist die Spießaufnahme in einem U-förmigen Lagerbock angeordnet und über zwei Schwenklager im Lagerbock gelagert. Zwischen den Schwenklagern erstreckt sich in der Schwenkachse der Dönergrillgerät-Schiebemuffe mindestens eine Schwenkwelle, die durchgehend einstückig oder zweistückig geteilt ausgeführt sein kann.

Eine bevorzugte Weiterbildung dieser Ausführungsform sieht vor, dass die Spießaufnahme ein Aufnahme-Oberteil und ein Aufnahme-Unterteil aufweist und das Aufnahme-Oberteil um eine Kippachse kippbar gegenüber dem Aufnahme-unterteil angeordnet und über zwei Kipplager an dem Aufnahme-Unterteil gelagert ist. Dabei ist die Ausnehmung für den Fleischspieß an dem Aufnahme-Oberteil ausgebildet und das Aufnahme-Unterteil über die zwei Schwenklager im Lagerbock gelagert. Damit wird ein weiterer Freiheitsgrad für die die Bewegung des in die Ausnehmung der Spießaufnahme eingesetzten Fleischspießes beim Aufrichten erreicht. Die Anzahl und die Art der möglichen Bewegungen, die die Ausnehmung ausführen kann, wird damit deutlich vergrößert. Dies vereinfacht insbesondere die Handhabung des Fleischspießes bei beengten Platzverhältnissen im Bereich des Dönergrillgerätes.

Bei einer bevorzugten Variante dieser speziellen Ausführungsform erstreckt sich die Kippachse der Spießaufnahme senkrecht zur Längsrichtung der Ausnehmung und zu der Schwenkachse des Lagerbockes. Damit wird eine kartanische Gelenkabstützung für den Fleischspieß realisiert, so dass der Fleischspieß in jede beliebige Raumrichtung von der horizontalen in die vertikale Richtung und umgekehrt seitlich schwenkbar ist. Dies hat den Vorteil, dass der mit Fleisch beladene Dönerspieß insbesondere beim Aufrichten äußerst einfach und mit redzuiertem Kraftaufwand geführt werden kann.

Bei einer begünstigten Ausführungsform der erfindungsgemäßen Dönergrillgerät-Schiebemuffe ist der Lagerbock drehbar mit der Gleitbuchse über eine Drehwelle verbunden, die sich senkrecht zu der Schwenkachse erstreckt. Damit ist die Spießaufnahme gegenüber der Gleitbuchse und somit gegenüber der Richtung der Gleitschiene veränderbar. Der Winkel ist beliebig wählbar, sodass das Einsetzen des Fleischspießes von vorne oder von der Seite in das Dönergrillgerät problemlos möglich ist. Vorzugsweise ist dabei die den Lagerbock mit der Gleitbuchse verbindende Drehwelle starr mit dem Lagerbock verbunden, wobei die Gleitbuchse mindestens eine Fixierschraube zur lagestabilen Festlegung der Drehwelle aufweist. Die Festlegung erfolgt durch Klemmen und kann in jeder Position der Spießaufnahme zu der Gleitbuchse durchgeführt werden.

In diesem Zusammenhang hat es sich als besonders zweckmäßig erwiesen, die Drehwelle in Längsrichtung mit mindestens einer ebenen Abflachung auszubilden und die Gleitbuchse mit einer Aufnahmebohrung auszuführen. Über die Abflachung kann die Drehwelle mittels der Fixierschraube besonders drehfest mit der Gleitbuchse verbunden werden, wenn die Fixierschraube gegen die Abflachung drückt. Eine Drehwelle mit mehreren Abflachungen, die beispielsweise eine mehreckige Querschnittsform aufweist, ermöglicht verschiedene sichere Fixierstellungen der Spießaufnahme gegenüber der Gleitbuchse bzw. Gleitschiene.

Vorzugsweise weist die Ausnehmung der Spießaufnahme, in die das untere bzw. obere Ende des Fleischspießes einsetzbar ist, eine runde oder eine der Querschnittsform des Fleischspießes entsprechende Umfangsform auf. Eine Dönergrillgerät-Schiebemuffe, bei der die Ausnehmung der Spießaufnahme als Sacklochbohrung ausgeführt ist, kommt vorzugsweise an der unteren Gleitschiene dann zum Einsatz, wenn dort kein motorischer Antrieb vorgesehen ist. Falls dies nicht der Fall ist, wird eine Ausführungsform benötigt, bei der die Ausnehmung der Spießaufnahme eine der kantigen Querschnittsform des Fleischspießes angepasste Umfangsform aufweist. Damit ist eine Drehmomentübertragung von dem motorischen Antrieb zu dem Fleischspieß für den Fall möglich, dass die Spießaufnahme der Schiebemuffe drehbar gelagert ist. Bei Dönergrillgeräten mit motorischen Antrieb wird typischerweise eine Dönergrillgerät-Schiebemuffe mit einer runden und eine Dönergrillgerät-Schiebemuffe mit einer eckigen Ausnehmung in der jeweiligen Spießaufnahme verwendet.

Nachfolgend wird die Erfindung anhand in der Zeichnung dargestellter Ausführungsbeispiele näher erläutert. Weitere Merkmale der Erfindung ergeben sich aus der folgenden Beschreibung der Ausführungsbeispiele der Erfindung in Verbindung mit den Ansprüchen und der beigefügten Zeichnung. Die einzelnen Merkmale der Erfindung könne für sich allein oder zu mehreren bei unterschiedlichen Ausführungsformen der Erfindung verwirklicht sein. Es zeigen vereinfacht in schematischer Darstellung:
- Figur 1: eine erste Ausführungsform der erfindungsgemäßen Dönergrillgerät-Schiebemuffe, bei der die Spießaufnahme einstückig ausgebildet und gegenüber der Gleitbuchse drehbar, jedoch nicht arretierbar ist, in Draufsicht in zwei Drehstellungen (Fig. 1a, 1b);
- Figur 2: die Schiebemuffe aus Figur 1 in Seitenansicht;
- Figur 3: eine zweite Ausführungsform der erfindungsgemäßen Dönergrillgerät-Schiebemuffe, bei der die Spießaufnahme gegenüber der Gleitbuchse drehbar und arretierbar ist, in Draufsicht (Fig. 3a) und in Seitenansicht (Fig. 3b);
- Figur 4: eine Variante der in den Figuren 1, 2 dargestellten Ausführungsform, bei der die Spießaufnahme mehrstückig ausgebildet ist, in zwei Seitenansichten (Fig. 4a, 4b); und
- Figur 5: eine Variante der in der Figur 3 dargestellten Ausführungsform mit mehrstückig ausgebildeter Spießaufnahme, in zwei Seitenansichten (Fig. 5a, 5b).

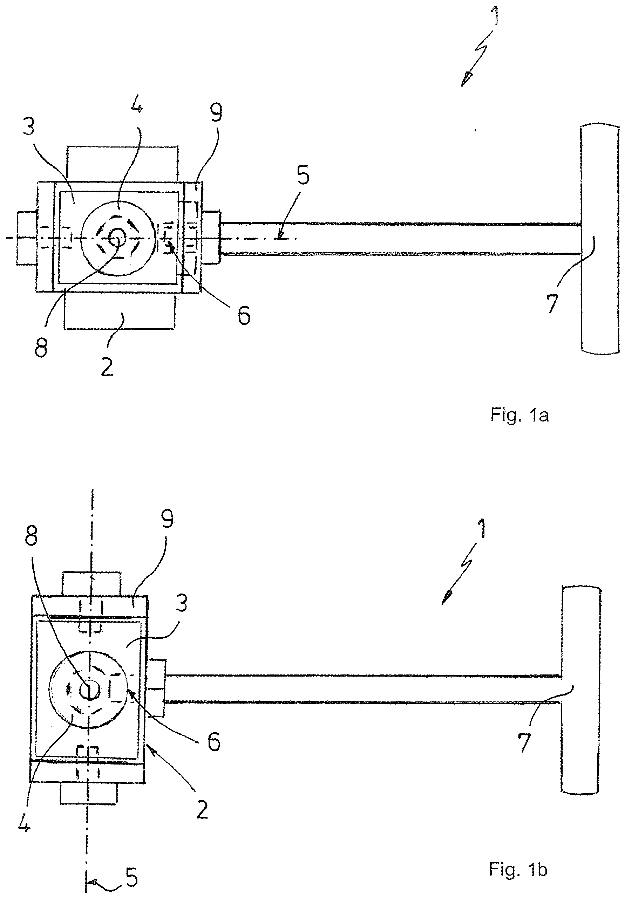

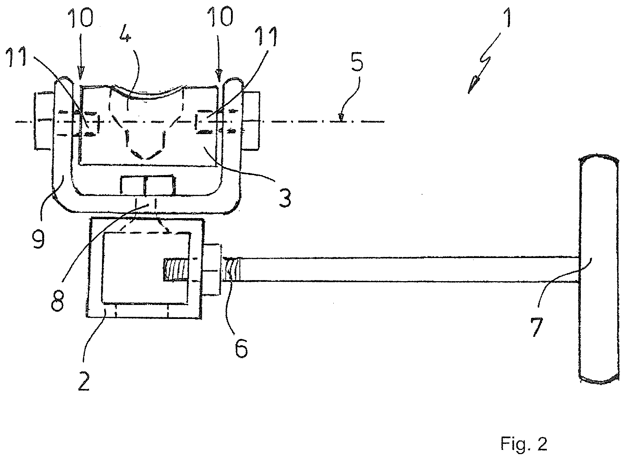

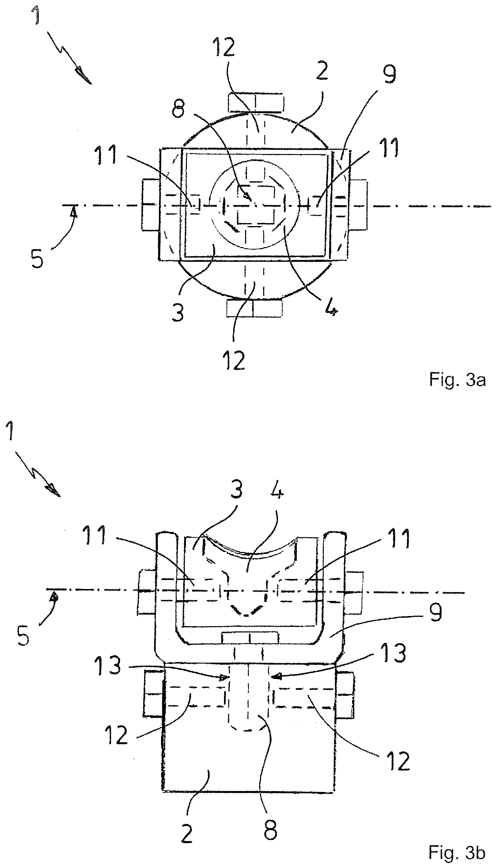

Die beigefügten Zeichnungen zeigen in den Figuren 1, 2 ein erstes und in der Figur 3 ein zweites Ausführungsbeispiel der erfindungsgemäßen Dönergrillgerät-Schiebemuffe. Die Dönergrillgerät-Schiebemuffe 1, zur Lagerung eines in der Zeichnung nicht dargestellten vertikal an einem Dönergrillgerät montierbaren kantigen Fleischspießes, weist jeweils eine Gleitbuchse 2 für die Montage an einer Gleitschiene des nicht dargestellten Dönergrillgerätes auf sowie eine mit der Gleitbuchse verbundene Spießaufnahme 3, die mit einer länglichen Ausnehmung 4 zum Einführen eines Endes des Fleischspießes versehen ist. Die Spießaufnahme 3 ist um eine Schwenkachse 5 schwenkbar gegenüber der Gleitbuchse 2 angeordnet, wobei sich die Schwenkachse 5 senkrecht zu der Längsrichtung der Ausnehmung 4 erstreckt. Die Gleitbuchse 2 weist eine Klemmschraube 6 auf, die sich als T-förmiger Handgriff 7 fortsetzt. Die Klemmschraube 6 mit Handgriff 7 ist zum Festlegen der Dönergrillgerät-Schiebemuffe 1 an der Gleitschiene des Dönergrillgerätes vorgesehen. Sie ist bei allen Ausführungsformen der erfindungsgemäßen Dönergrillgerät-Schiebemuffe 1 vorhanden, jedoch in der Figur 3 nicht dargestellt.

Bei diesen beiden dargestellten Ausführungsformen ist die Spießaufnahme 3 gegenüber der Gleitbuchse 2 über eine Drehwelle 8 drehbar an der Gleitbuchse 2 gelagert, die sich in Längsrichtung fluchtend mit der Ausnehmung 4 erstreckt. Die Figuren 1a und 1b zeigen die Spießaufnahme 3 in zwei um 90° unterschiedlichen Drehstellungen zu der Gleitbuchse 2, die Figur 2 die Seitenansicht der in der Figur 1b dargestellten Stellung. Die Spießaufnahme 3 ist bei allen gezeigten Ausführungsformen der Erfindung in einem U-förmigen Lagerbock 9 angeordnet, der mittels der Drehwelle 8 mit der Gleitbuchse 2 schwenkbar verbunden ist. Dabei ist die Spießaufnahme 3 über zwei Schwenklager 10 im Lagerbock 9 schwenkbar gelagert. Entlang der Schwenkachse 5 erstrecken sich zwei Schwenkwellen 11, die den Lagerbock 9 seitlich mit der Spießaufnahme 3 im Bereich der Schwenklager 10 beweglich verbinden. Die längliche Ausnehmung 4 der Spießaufnahme 3 ist als Bohrung rund ausgeführt, wobei die Ausnehmung 4 alternativ auch eine der kantigen Querschnittsform des Fleischspießes Umfangsform aufweisen kann.

Bei allen in den Figuren 1 bis 3 gezeigten Ausführungsbeispielen sind beide Schwenkwellen 11 und die Drehwelle 8 vom Schaft einer Zylinderschraube 11 bzw. 8 gebildet. Die Figuren 1, 2 zeigen eine Ausführungsform der Erfindung, bei der die Zylinderschraube 8 weder drehfest mit der Gleitbuchse 2 noch mit dem Lagerbock 9 verbunden ist Die Spießaufnahme 3 und die Gleitbuchse 2 sind somit frei gegeneinander und gegenüber der Drehwelle 8 unbegrenzt verdrehbar. Bei der in der Figur 3 abgebildeten Variante ist die Zylinderschraube 8 starr mit dem Lagerbock 9 und drehbar mit der Gleitbuchse 2 verbunden. In den Figuren 3a, 3b ist die an der Gleitbuchse 2 vorgesehene Klemmschraube nicht dargestellt. Außerdem zeigt die Figur 3b im Hinblick auf die Figur 3a die Spießaufnahme 3 gegenüber der Gleitbuchse 2 um 90° verdreht. Zur lagestabilen Festlegung der Drehwelle 8 weist die Gleitbuchse 2 zwei einander gegenüberliegende seitliche Fixierschrauben 12 auf, die ein Klemmen der Zylinderschraube 8 ermöglichen. Die Drehwelle 8 weist vorzugsweise mehrere sich in Längsrichtung erstreckende ebene Abflachungen 13 auf. Auf jeweils eine dieser Abflachungen 13 kann jede der Fixierschrauben 12 klemmend einwirken und so eine besonders sichere drehfeste Fixierung ermöglichen. Bei festgezogenen Fixierschrauben 12 ist die Spießaufnahme 3 mit der Gleitbuchse 2 besonders starr verbunden.

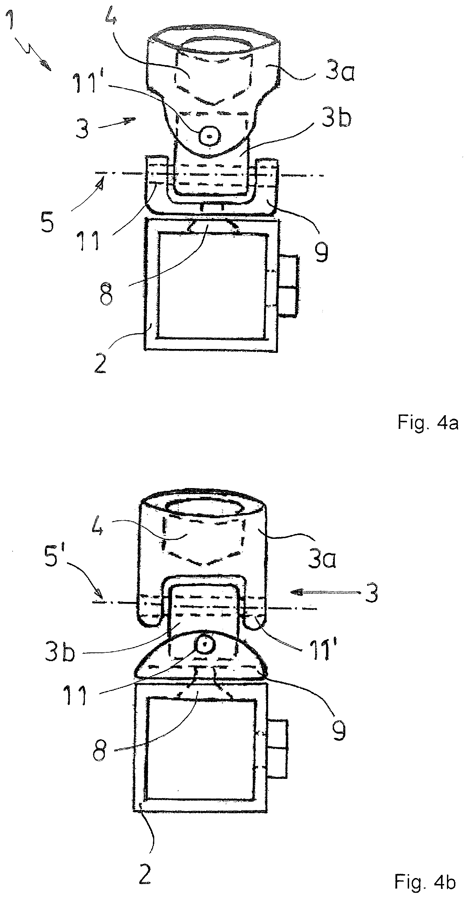

Die Figuren 4a, 4b zeigen eine Variante der ersten Ausführungsform, bei der die Schiebemuffe mehrstückig ausgebildet ist. Die in den Figuren 1, 2 abgebildete Klemmschraube 6 mit Handgriff 7 ist nicht dargestellt. Die mehrstückige Spießaufnahme 3 weist ein Aufnahme-Oberteil 3a und ein Aufnahme-Unterteil 3b auf, wobei das Aufnahme-Oberteil 3a um eine Kippachse 5' kippbar gegenüber dem Aufnahme-Unterteil 3b angeordnet und über zwei Kipplager 10' an dem Aufnahme-Unterteil 3b gelagert ist. Dabei ist die Ausnehmung 4 an dem Aufnahme-Oberteil 3a ausgebildet und das Aufnahme-Unterteil 3b über die zwei Schwenklager 10 im Lagerbock 9 gelagert. Der Lagerbock 9 ist über eine Drehwelle 8 drehbar an der Gleitbuchse 2 gelagert, die sich in Längsrichtung fluchtend mit der Ausnehmung 4 erstreckt. Den unterschiedlichen Seitenansichten von Figur 4a, 4b ist zu entnehmen, dass sich die Kippachse 5' senkrecht zu der Längsrichtung der Ausnehmung 4 und senkrecht zu der Schwenkachse 5 erstreckt. In diesem Ausführungsbeispilel erstreckt sich entlang der Kippachse 5' eine Kippwelle 11', die das Aufnahme-Oberteil 3a seitlich mit dem Aufnahme-Unterteil 3b im Bereich der Kipplager 10' beweglich verbindet, wobei sich entlang der Schwenkachse 5 eine Schwenkwelle 11 erstreckt, die den Lagerbock 9 seitlich mit dem Aufnahme-Unterteil 3b der Spießaufnahme 3 im Bereich der Schwenklager 10 schwenkbeweglich verbindet.

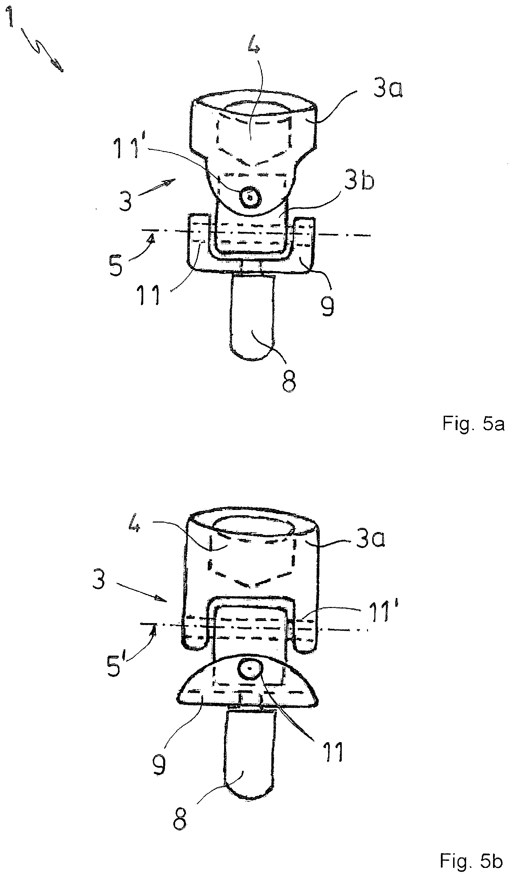

Die Figuren 5a, 5b zeigen eine Variante der zweiten Auführungsform, bei der die Schiebemuffe 3 ebenfalls mehrstückig ausgebildet ist. Die in der Figur 3 abgebildete Gleitbuchse 2 ist nicht dargestellt. Die in der Figur 5 abgebildete Ausführungsform unterscheidet sich von der in der Figur 4 dargestellten Ausführungsform lediglich dadurch, dass die Zylinderschraube 8 starr mit dem Lagerbock 9 und drehbar mit der nicht dargestellten Gleitbuchse 2 verbunden ist. Hier ist deutlich zu erkennen, dass die mehrstückige Spießaufnahme 3 zusammen mit dem Lagerbock 9 eine Art von Kardan-Gelenk für den Fleichspieß darstellt.

## Patentansprüche

1. Dönergrillgerät-Schiebemuffe (1) zur Lagerung eines vertikal an einem Dönergrillgerät montierbaren kantigen Fleischspießes, die an einer oberen oder unteren Gleitschiene des Dönergrillgerätes verschiebbar montierbar und dort mittels einer seitlichen Klemmschraube (6) arretierbar ist, und die eine Gleitbuchse (2) für die Gleitschiene und eine mit der Gleitbuchse (2) verbundene Spießaufnahme (3) mit einer Ausnehmung (4) zum Einführen eines unteren oder oberen Endes des Fleischspießes aufweist, wobei die Spießaufnahme (3) um eine Schwenkachse (5), die sich senkrecht zu der Längsrichtung der Ausnehmung (4) erstreckt, schwenkbar gegenüber der Gleitbuchse (2) angeordnet ist, **dadurch gekennzeichnet, dass**
- die Gleitbuchse (2) einen U-förmigen Lagerbock (9) trägt,
- die Gleitbuchse (2) in Richtung der Spießaufnahme (3) eine geschlossene vorzugsweise ebene Fläche aufweist, zu der sich die Schwenkachse (5) horizontal parallel erstreckt,
- der Lagerbock (9) drehbar mit der Gleitbuchse (2) über eine Drehwelle (8) verbunden ist,
- die Spießaufnahme (3) im Lagerbock (9) angeordnet und über mindestens eine Schwenkwelle (11), die die Schwenkachse (5) definiert, an dem Lagerbock (9) schwenkbar gelagert ist, und
- die Drehwelle (8) sich senkrecht zu der Schwenkachse (5) und bei vertikaler Stellung des Fleischspießes fluchtend mit der Längsrichtung der Ausnehmung (4) der Spießaufnahme (3) erstreckt.

2. Dönergrillgerät-Schiebemuffe nach Anspruch 1, **dadurch gekennzeichnet, dass** die Spießaufnahme (3) über zwei Schwenklager (10) im Lagerbock (9) gelagert ist.

3. Dönergrillgerät-Schiebemuffe nach Anspruch 2, **dadurch gekennzeichnet, dass** die Spießaufnahme (3) ein Aufnahme-Oberteil (3a) und ein Aufnahme-Unterteil (3b) aufweist und das Aufnahme-Oberteil (3a) um eine Kippachse (5') kippbar gegenüber dem Aufnahme-Unterteil (3b) angeordnet und über zwei Kipplager (10') an dem Aufnahme-Unterteil (3b) gelagert ist, wobei die Ausnehmung (4) an dem Aufnahme-Oberteil (3a) ausgebildet und das Aufnahme-Unterteil (3b) über die zwei Schwenklager (10) im Lagerbock (9) gelagert ist.

4. Dönergrillgerät-Schiebemuffe nach Anspruch 3, **dadurch gekennzeichnet, dass** sich die Kippachse (5') senkrecht zu der Längsrichtung der Ausnehmung (4) und zu der Schwenkachse (5) erstreckt.

5. Dönergrillgerät-Schiebemuffe nach Anspruch 1, **dadurch gekennzeichnet, dass** die Drehwelle (8) starr mit dem Lagerbock (9) verbunden ist und die Gleitbuchse (2) mindestens eine Fixierschraube (12) zur lagestabilen Festlegung der Drehwelle (8) aufweist.

6. Dönergrillgerät-Schiebemuffe nach Anspruch 5, **dadurch gekennzeichnet, dass** die Drehwelle (8) in Längsrichtung mindestens eine ebene Abflachung (13) und die Gleitbuchse (2) eine Aufnahmebohrung für die Drehwelle (8) aufweist.

7. Dönergrillgerät-Schiebemuffe nach nach einem der vorstehenden Ansprüche, **dadurch gekennzeichnet, dass** die Ausnehmung (4) der Spießaufnahme (3) eine runde oder eine der kantigen Querschnittsform des Fleischspießes entsprechende Umfangsform aufweist.

## Claims

1. Sliding sleeve (1), for a kebab grill apparatus, for supporting an angled meat skewer that can be mounted vertically on a kebab grill apparatus and can be movably mounted on an upper or lower sliding rail of the kebab grill apparatus and can be locked there by means of a lateral locking screw (6), and which sliding sleeve comprises a sliding socket (2), for the sliding rail, and a skewer receptacle (3), connected to the sliding socket (2), which has a recess (4) for inserting a top or bottom end of the meat skewer, the skewer receptacle (3) being arranged so as to be pivotable, with respect to the sliding socket (2), about a pivot axis (5) that extends perpendicularly to the longitudinal direction of the recess (4), **characterised in that**
- the sliding socket (2) carries a U-shaped bearing block (9),
- the sliding socket (2) has, in the direction of the skewer receptacle (3), a closed, preferably planar, surface, in parallel with which the pivot axis (5) horizontally extends,
- the bearing block (9) is rotatably connected to the sliding socket (2) by means of a rotating shaft (8),
- the skewer receptacle (3) is arranged in the bearing block (9) and is pivotally mounted on the bearing block (9) by means of a pivot shaft (11) that defines the pivot axis (5), and
- the rotating shaft (8) extends perpendicularly to the pivot axis (5) and, when the meat skewer is positioned vertically, extends so as to be aligned with the longitudinal direction of the recess (4) of the skewer receptacle (3).

2. Sliding sleeve, for a kebab grill apparatus, according to claim 1, **characterised in that** the skewer receptacle (3) is supported by two pivot bearings (10) in the bearing block (9).

3. Sliding sleeve, for a kebab grill apparatus, according to claim 2, **characterised in that** the skewer receptacle (3) comprises a receptacle top part (3a) and a receptacle bottom part (3b) and the receptacle top part (3a) is arranged to as to be tiltable about a tilt axis (5') with respect to the receptacle bottom part (3b) and is supported on the receptacle bottom part (3b) by two tilt bearings (10'), the receptacle (4) being supported on the receptacle top part (3a) and the receptacle bottom part (3b) being supported by the two pivot bearings (10) in the bearing block (9).

4. Sliding sleeve, for a kebab grill apparatus, according to claim 3, **characterised in that** the tilt axis (5') extends perpendicularly to the longitudinal direction of the recess (4) and the pivot axis (5).

5. Sliding sleeve, for a kebab grill apparatus, according to claim 1, **characterised in that** the rotating shaft (8) is rigidly connected to the bearing block (9), and the sliding socket (2) comprises at least one retaining screw (12) for position-stable fixing of the rotating shaft (8).

6. Sliding sleeve, for a kebab grill apparatus, according to claim 5, **characterised in that** the rotating shaft (8) comprises in the longitudinal direction at least one planar flattened region (13) and the sliding socket (2) comprises a receiving hole for the rotating shaft (8).

7. Sliding sleeve, for a kebab grill apparatus, according to any of the preceding claims, **characterised in that** the peripheral shape of the recess (4) of the skewer receptacle (3) is rounded or corresponds to the angled cross-sectional shape of the meat skewer.

## Revendications

1. Manchon coulissant (1) pour grilloirs à viandes de type « Dôner », dédié au support d'une brochette à arêtes vives pouvant être montée verticalement sur un grilloir à viandes de type « Dôner », lequel manchon peut être monté à coulissement sur une glissière supérieure ou inférieure dudit grilloir à viandes de type « Döner », sur laquelle il peut être arrêté au moyen d'une vis latérale de coincement (6), et est muni d'une douille de glissement (2) affectée à ladite glissière, et d'un logement (3) relié à ladite douille de glissement (2) et pourvu d'un évidement (4) dévolu à l'introduction d'une extrémité inférieure ou supérieure de ladite brochette, ledit logement (3) de brochette étant agencé avec faculté de pivotement, par rapport à ladite douille de glissement (2), autour d'un axe de pivotement (5) s'étendant perpendiculairement à la direction longitudinale dudit évidement (4),
**caractérisé par le fait que**
- la douille de glissement (2) porte un bloc de support (9) configuré en U,
- ladite douille de glissement (2): présente, en direction du logement (3) de brochette, une surface fermée, plane de préférence, parallèlement à laquelle l'axe de pivotement (5) s'étend dans le sens horizontal,
- ledit bloc de support (9) est relié à ladite douille de glissement (2) de manière rotative, par l'intermédiaire d'un arbre de rotation (8),
- ledit logement (3) de brochette est situé dans ledit bloc de support (9) et est monté à pivotement, sur ledit bloc de support (9), par l'intermédiaire d'au moins un arbre de pivotement (11) définissant ledit axe de pivotement (5), et
- ledit arbre de rotation (8) s'étend perpendiculairement audit axe de pivotement (5), et dans l'affleurement de la direction longitudinale de l'évidement (4) dudit logement (3) de brochette lorsque ladite brochette se trouve en position verticale.

2. Manchon coulissant pour grilloirs à viandes de type « Döner », selon la revendication 1, **caractérisé par le fait que** le logement (3) de brochette est monté dans le bloc de support (9) par l'intermédiaire de deux paliers de pivotement (10).

3. Manchon coulissant pour grilloirs à viandes de type « Döner », selon la revendication 2, **caractérisé par le fait que** le logement (3) de brochette comprend une partie supérieure (3a) et une partie inférieure (3b), ladite partie supérieure (3a) du logement étant agencée, par rapport à ladite partie inférieure (3b) du logement, de manière basculante autour d'un axe de basculement (5'), et étant montée sur ladite partie inférieure (3b) dudit logement par l'intermédiaire de deux paliers de basculement (10'), sachant que l'évidement (4) est ménagé dans ladite partie supérieure (3a) dudit logement, et que ladite partie inférieure (3b) dudit logement est montée dans le bloc de support (9) par l'intermédiaire des deux paliers de pivotement (10).

4. Manchon coulissant pour grilloirs à viandes de type « Dôner », selon la revendication 3, **caractérisé par le fait que** l'axe de basculement (5') s'étend perpendiculairement à la direction longitudinale de l'évidement (4), et à l'axe de pivotement (5).

5. Manchon coulissant pour grilloirs à viandes de type « Döner », selon la revendication 1, **caractérisé par le fait que** l'arbre de rotation (8) est relié rigidement au bloc de support (9), et la douille de glissement (2) est dotée d'au moins une vis (12) de blocage à demeure, en vue de l'immobilisation dudit arbre de rotation (8) en position stable.

6. Manchon coulissant pour grilloirs à viandes de type « Dôner », selon la revendication 5, **caractérisé par le fait que** l'arbre de rotation (8) est muni d'au moins un méplat (13) dans la direction longitudinale, la douille de glissement (2) étant pourvue d'un alésage destiné à recevoir ledit arbre de rotation (8).

7. Manchon coulissant pour grilloirs à viandes de type « Döner », selon l'une des revendications précédentes, **caractérisé par le fait que** le pourtour de l'évidement (4) du logement (3) de brochette présente une forme ronde, ou une forme correspondant à la configuration à arêtes vives de la section transversale de ladite brochette.
